# EUROPEAN PATENT SPECIFICATION

(11) **EP 3 661 837 B1**
(45) Date of publication and mention of the grant of the patent: **29.09.2021**
(21) Application number: 18762394.7
(22) Date of filing: 03.08.2018
(51) Int. Cl.: B62J 9/23, B62J 9/24, B62J 7/08

(54) **FASTENING SYSTEM FOR FASTENING BAGS TO A MOTORCYCLE**
BEFESTIGUNGSSYSTEM ZUR BEFESTIGUNG VON TASCHEN AN EINEM MOTORRAD
SYSTÈME DE FIXATION POUR LA FIXATION DE SACOCHES À UNE MOTOCYCLETTE

(30) Priority: 04.08.2017 IT 201700090795
(43) Date of publication of application: 10.06.2020
(73) Proprietor: Givi S.p.A., 25020 Flero (BS) (IT)
(72) Inventor: VISENZI, Giuseppe, 25123 Brescia (IT)
(74) Representative: Branca, Emanuela
(86) International application number: PCT/IB2018/055865
(87) International publication number: WO 2019/026046

(56) References cited:
- EP-A1- 2 402 237
- EP-A2- 2 586 687
- DE-U1- 29 921 906

## Description

### FIELD OF THE INVENTION

The present invention relates to a fastening system for fastening a bag or a top-box to a support structure integrally connected to a motorcycle.

The fastening system according to the present invention allows to fasten a rigid or soft bag or a top-box both to the rack structure positioned posteriorly to the saddle of the motorcycle, and to the luggage rack structure, in general consisting of a tubular structure, positioned laterally to the vehicle.

### STATE OF THE ART

Fastening systems for fastening a top-box, or topcase, to the posterior luggage rack structure of a motorcycle are known in the sector.

In general, these systems comprise a plate that is stably fixed to the rear luggage rack and configured so as to make it possible to fasten a rigid top-box, or topcase to said plate.

In general, these systems provide for the lower surface of the top-box to be provided with fastening means for fastening the top-box to the plate. Such means can comprise one or more pins integral with the top-box and one or more corresponding seats obtained on the plate, and the stability of the connection between the top-box and the plate is assured by the action of a dedicated lock, which is an integral part of the system for fastening the top-box to the support plate that allows removal of the top-box only to the user in possession of the necessary key.

However, these known systems have some drawbacks.

One of the main drawbacks of these known fastening systems is that the support plate that is connected to the luggage rack of the motorcycle can allow mounting different top-box models, however it cannot be fastened for example to the tubular structure for supporting the lateral bags.

Known fastening systems do not assure sufficient fastening stability if the lateral bag is hung from the plate, which in turn was not designed to be connected to said tubular structure.

Moreover, these fastening systems conceived to fasten a top-box to a support plate in turn stably connected to the central luggage rack structure of a motorcycle, would not allow a convenient and secure detachment of the bag from the plate itself if this said plate were in the vertical position because it is connected to the lateral tubular luggage rack structure of a motorcycle. This is because known fastening systems are conceived to fasten the top-box to the luggage rack setting the top-box itself down on the support plate, the top-box being thus supported by the plate in the operations of positioning and fastening, as well as of unfastening and removing, the top-box itself to/from the support plate.

An additional disadvantage of known fastening systems is that generally the support plate that is fixed to the luggage rack structure of the motorcycle is configured to allow fastening a specific top-box model. As stated, the support plate is specifically designed to house fastening means, or it is itself provided with fastening means, which find corresponding means directly obtained on the lower surface of the top-box itself. Document DE29921906U, which discloses all the features of the preamble of independent claim 1, discloses one known fastening system.

For these reasons, if it is desired or if it becomes necessary for any reason to replace the top-box, the entire fastening system will necessarily have to be replaced, including the support plate fixed to the luggage rack of the vehicle.

### SUMMARY OF THE INVENTION

The specific task of the invention therefore is to overcome the drawbacks left unresolved by known fastening systems.

Within this task, a purpose of the present invention in particular is to provide a new fastening system for fastening a rigid or soft bag or a top-box to a support structure integrally connected with a motorcycle, which allows fastening a bag or a top-box to a support structure integrally connected with a motorcycle, both if said support structure consists of the central luggage rack of the motorcycle, and if said support structure consists of the tubular structure for lateral bags, allowing a simple and secure fastening even if the support plate is positioned vertically because it is connected to the lateral bag rack structure of a motorcycle.

An additional purpose of the present invention is to provide a fastening system for fastening a bag or of a top-box to a support structure integrally connected with a motorcycle, which allows fixing both top-boxes or rigid bags, made of plastic material or of metallic material, and soft bags, made of fabric, in general synthetic fabric or polymeric materials.

The fastening system according to the present invention makes it possible to fasten to the support plate a different type or model of bag or of top-box without having to replace the entire fastening system, but being able to replace only the bag or top-box.

This task, as well as the aforementioned purposes and others that will become more readily apparent hereafter, are achieved by a fastening system for fastening a bag or a top-box to a support structure integrally connected with a motorcycle, according to claim 1.

Further features of the fastening system according to the present invention are set forth in the dependent claims.

### LIST OF FIGURES

The characteristics and advantages of the fastening system for fastening a bag or of a top-box to a support structure integrally connected with a motorcycle, according to the present invention will become more readily apparent from the following detailed description, provided by way of non-limiting example, referred to the accompanying schematic drawings in which:
- Figure 1 shows a perspective view of the components of the fastening system according to the present invention;
- Figures 2A and 2B show an exploded and, respectively, assembled perspective view of the support plate that is a part of the fastening system according to the present invention fixed to a support structure for lateral bags of a motorcycle;
- Figures 3A and 3B show an exploded and, respectively, assembled perspective view of the support plate that is a part of the fastening system according to the present invention fixed to a support structure for a central top-box of a motorcycle;

- Figures 4A, 4B and 4C show different steps of fastening a bag to a support plate by means of the fastening system according to the present invention;
- figures 5A and 5B show different steps of operation of the closure device that is a part of the fastening system according to the present invention;
- Figure 6 shows an exploded view of the closing system that is a part of the fastening system according to the present invention.

### DETAILED DESCRIPTION OF THE INVENTION

The accompanying figures show overall views and views of the details and exploded views of the individual elements that constitute the fastening system for fastening a bag or a top-box to a support structure integrally connected with a motorcycle according to the present invention.

With particular reference to the accompanying figures, the fastening system **10** according to the present invention for fastening a bag **1** or a top-box to a support structure **6, 7** integrally connected with a motorcycle comprises a plate **3** configured to be stably fixed to a support structure integrally connected with the motorcycle, and a counter-plate **4** stably fixed to said bag **1** or top-box to be fastened to the support structure of the motorcycle.

Said counter-plate can be removably associated to the plate **3,** and for this purpose the counter-plate **4** comprises a plurality of fastening teeth **41,** while at the same time the plate **3** will comprise a corresponding number of housing seats **31.**

More in particular, each of the housing seats **31** is configured to house one of said fastening teeth **41,** and each of them will comprise for this purpose at least one insertion segment **31a** configured to allow the insertion of one of said teeth **41** following an approach movement along a direction substantially orthogonal to the surfaces of the plates intended to face coupled plates, of the counter-plate **4** to the plate **3.**

In addition, each of said housing seats **31** will comprise a sliding segment **31b** for fastening said tooth **41** in said seat **31,** following a translating movement of said counter-plate **4** with respect to said plate **3,** which as stated will previously have been fixed to the support structure **6, 7** of the motorcycle, and hence it is assumed to be in a fixed position.

The fastening system **10** according to the present invention further comprises at least one closure device **50** able to be actuated by the user and configured for selectively preventing the relative translation movements of said counter-plate **4** with respect to said plate **3.**

Advantageously, according to a preferred embodiment of the invention described herein by way of example, the counter-plate **4** is made of plastic material or of other suitable, light, resistant material suited for obtaining a moulded piece, and it is fixed to the motorcycle bag **1** by screws or rivets, thus becoming an integral part of the bag **1.**

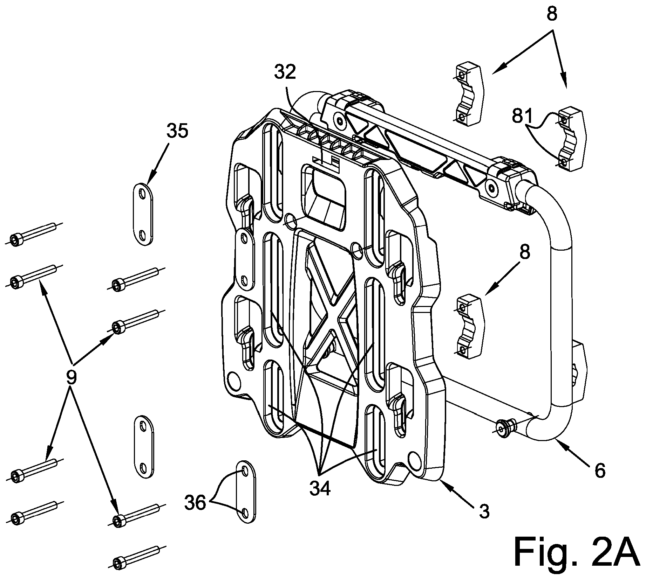

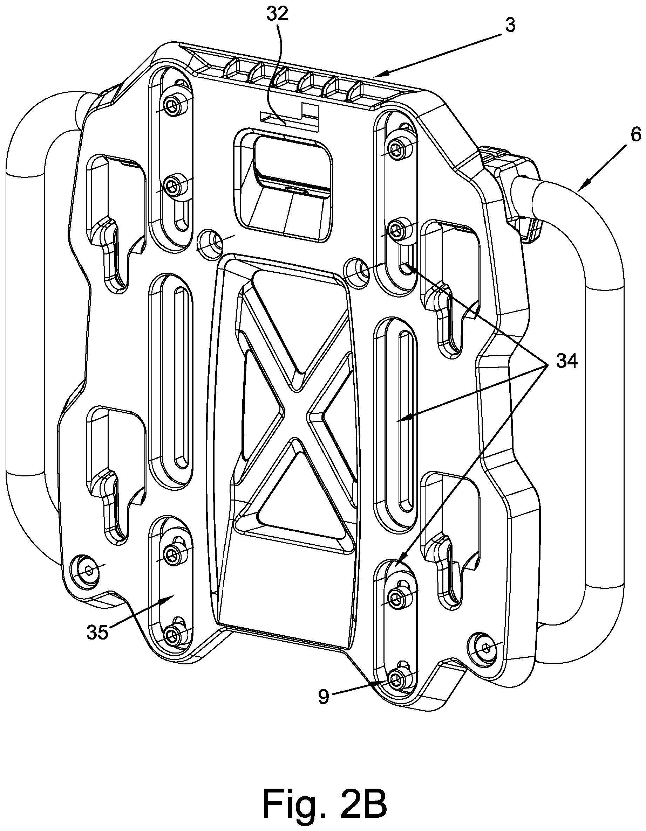

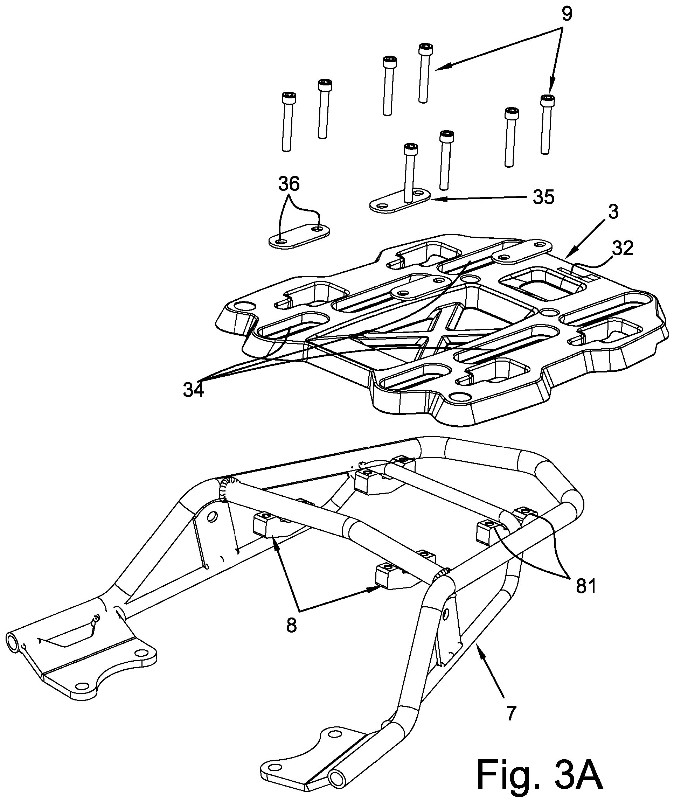

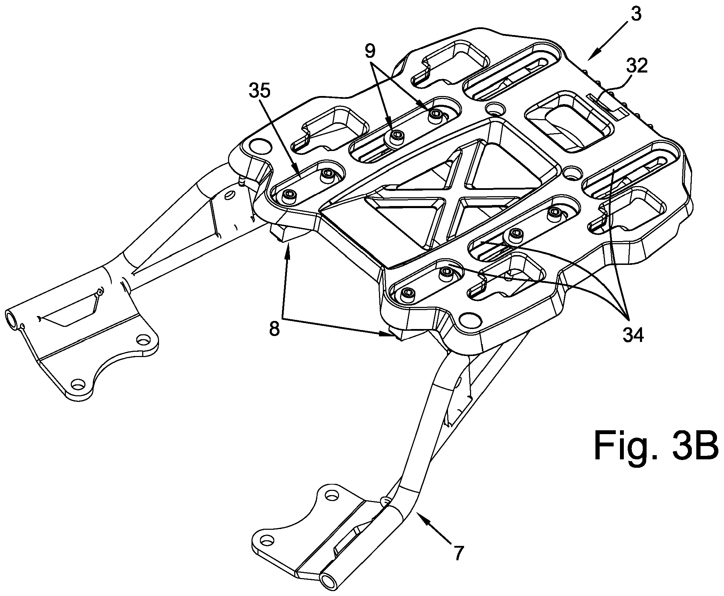

The plate **3,** also preferably but not necessarily made of plastic material, is configured to be fixed to the support structure for the lateral bags of a motor cycle, as shown for example in figures 2A and 2B where it is designated with the reference numeral **6,** or the central luggage rack of the motorcycle, shown for example in Figures 3A and 3B where it is designated with the reference numeral **7.**

For the purpose, on the plate **3** is obtained a plurality of shaped guides **34** within which can be housed holed platelets **35.**

In the holes **36** of said holed platelets **35** can advantageously be inserted metric screws **9** which are screwed in the threaded holes **81** obtained on suitable clevises **8** configured to encompass said support structure **6, 7** or on nuts housed within said clevises **8.**

Advantageously, said support structure **6, 7** comprises in general at least one tubular segment, and said clevises **8** are configured to encompass said tubular segment.

The counter-plate **4** is advantageously fixed to the bag **1** by means of screws or rivets which pass through the holes **42.**

The operation of the fastening system **10** according to the present invention is as follows.

The counter-plate **4,** which as stated is integrally connected with a bag **1,** is coupled to the plate **3** through the insertion of the fastening teeth **41** within the corresponding housing seats **31** present on the plate **3.**

Preferably, according to the embodiment shown in the accompanying figures, said fastening teeth **41** are four in number.

This contributes to make more stable the fastening of the bag to the support structure of the motor vehicle, and this provides a particular advantage above all when the bag is fastened to the support structure for lateral luggage of the motorcycle, situation in which the bag **1** is substantially "hung" from the support structure **6.**

Advantageously, said fastening teeth **41** are obtained in a single piece on the counter-plate **4.**

Once the fastening teeth **41** are inserted into the first housing segment **31a** of the housing seat **31,** fastening is completed moving the bag **1** so as to obtain a relative translation of the counter-plate **4** with respect to the plate **3** to bring the fastening teeth **41** to the end stop in the sliding segment **31b** of the housing seats **31.**

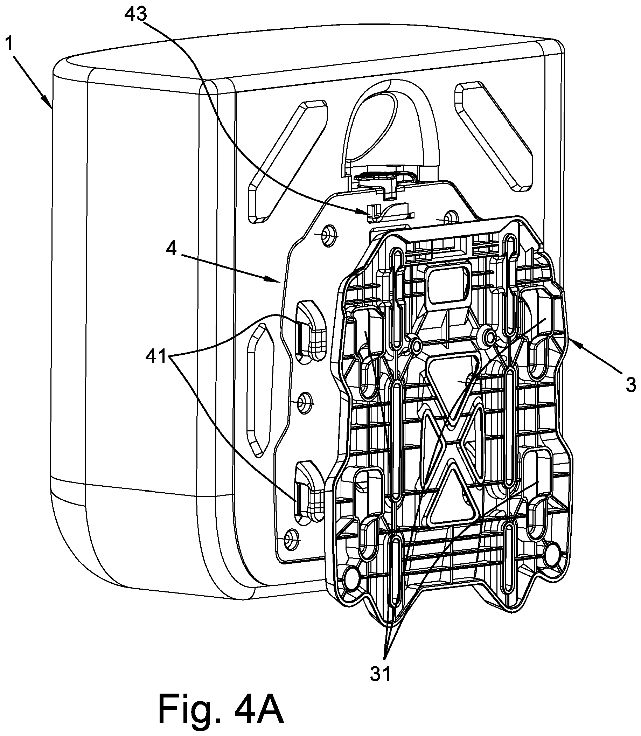

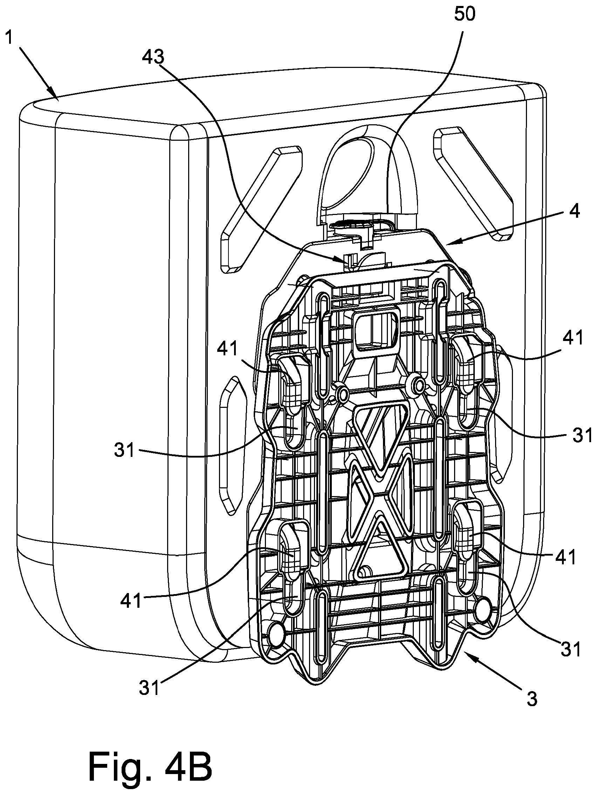

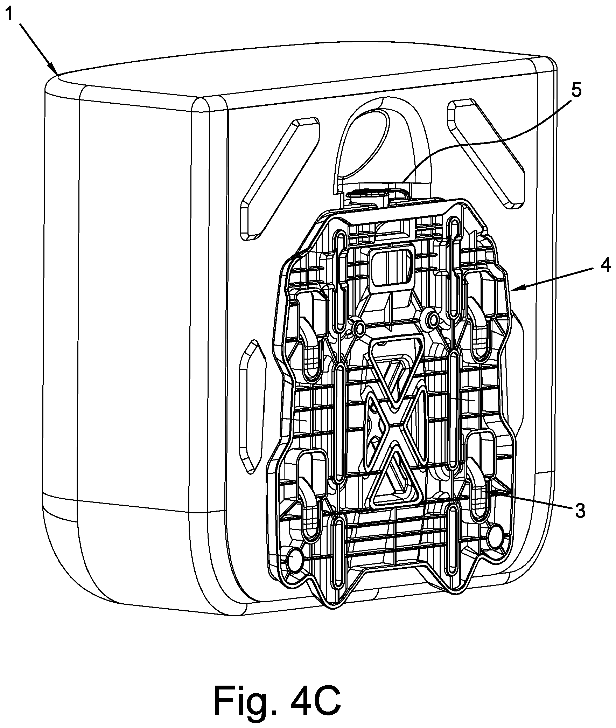

Figures 4A, 4B and 4C show various steps of the fastening of the counter-plate **4,** to which is connected the bag **1,** to the plate **3.** In these figures the plate **3** is oriented vertically in space, as occurs in the case of fastening to the support structure for lateral bags **6** of a motorcycle.

Advantageously, said fastening teeth **41** are configured "like a hook", with a first segment **41a** that joins to said counter-plate **4** and projects from it in a direction substantially orthogonal to the plane in which the counter-plate **4** lies, and a second segment **41b** that extends substantially parallel to the plane in which said counter-plate **4** lies.

Preferably, each of said housing seats **31** has an insertion segment **31a** having, on the plane defined by said plate **3,** a substantially quadrangular or similar profile, and a sliding segment **31b** that joins to said insertion segment **31a** and that has, on the plane defined by said plate **3,** a substantially elongated profile having a width suitable for allowing the sliding of said tooth **41** in said sliding segment **31b** in order to carry out the fastening of the counter-plate **4** and of the plate **3** following the relative translation movement of said counter-plate **4** with respect to said plate **3.**

To assure that the counter-plate **4,** to which the bag **1** is connected, is not uncoupled from the plate **3** thus with the risk that the bag may become unfastened from the motorcycle the fastening system **10** according to the present invention comprises, preferably on the counter-plate **4,** a closure device **50** able to be actuated by the user.

In more detail, said closure device **50** is configured so as to selectively prevent the relative translation movements of said counter-plate **4** with respect to said plate **3.**

Preventing the sliding of the counter-plate **4** with respect to the plate **3,** the fastening teeth **41** are prevented from sliding within said sliding segments **31b** of the housing seats **31,** moving to the housing segments **31a,** condition in which the counter-plates **4** can be uncoupled from the plate **3.**

The closure device **50** comprises a lock cylinder **51a** inserted in a containment cylinder **59** configured to be inserted in a dedicated closing case **59a,** said device comprising a dedicated key **51** for the actuation of the lock cylinder **51a.**

Advantageously, the key **51,** through the lock cylinder **51a,** actuates a locking element **52,** or sub-lock, so that by rotating the key by 90° one equally obtains a 90° rotation of the locking element **52,** or sub-lock, preferably shaped as a platelet and comprising a locking tooth **53** that protrudes from said locking element in a direction substantially perpendicular to the plane in which said locking element **52** lies.

The coupling between the counter-plate **4** and the plate **3** is allowed when the key **51** of the closure device **50** is in open position, for example corresponding to a condition of the key parallel to the plates, so that the locking element **52** is fully within a closing case **59a,** as will be better described hereafter.

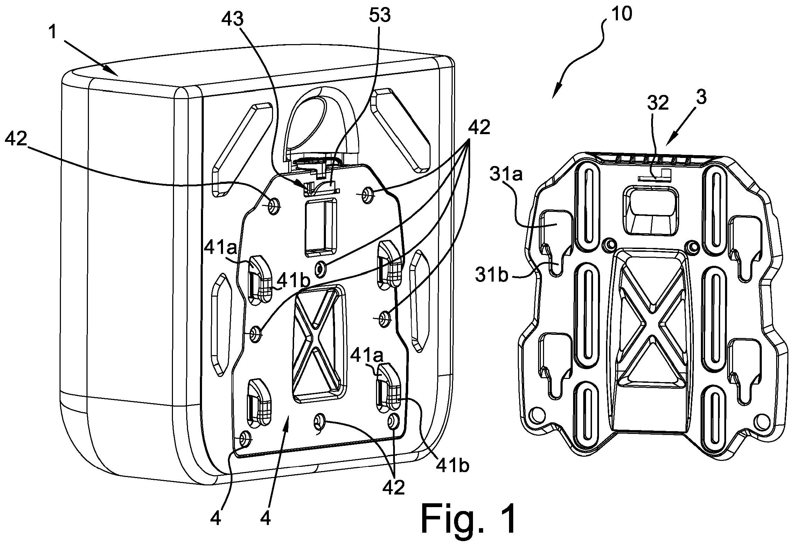

On the counter-plate **4** is obtained an opening **43** that allows the movement of the locking element **52** which, actuated by the key **51,** can be brought in the position visible for example in Figure 1 in which it projects from counter-plate **4** through the opening **43,** as better described hereafter.

After coupling the two plates to each other, with the described procedure, it is then possible to rotate the key **51** in closed position, for example corresponding to a condition with the key perpendicular to the plates. In this way, the locking element **52** rotate entering into the corresponding opening **32** obtained on the plate **3** and thanks to the interference between the locking tooth **53** and the plate **3** it is not possible to separate the counter-plate **4,** and hence the bag **1,** from the plate **3.**

To unfasten the bag **1** from the plate **3** and hence from the vehicle, it is necessary to rotate the key **51** in the open position and hence to move the bag upwards so as to make the counter-plate **4** translate with respect to the plate **3** until the fastening teeth **41** are at said housing segments **31a** of said housing seats **31.**

At this point, the bag **1** can be unfastened from the plate **3** by means of a movement away in a direction substantially orthogonal to the plate **3** of the bag, thus causing the counter-plate **4** to move away from the plate **3.**

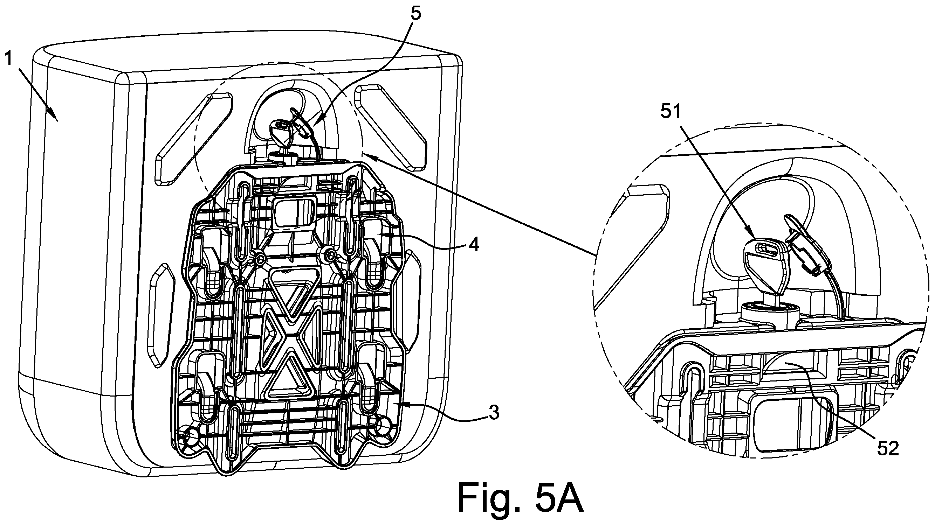

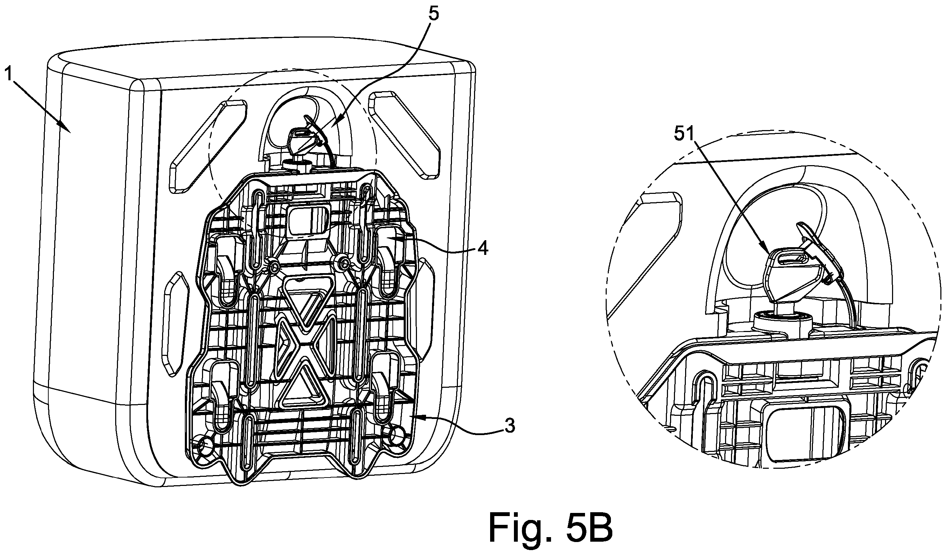

Figures 5A shows the fastening system **10** according to the present invention with the key **51** of the locking device in closed position, while figure 5B shows the condition in which the key **51** is in the open position.

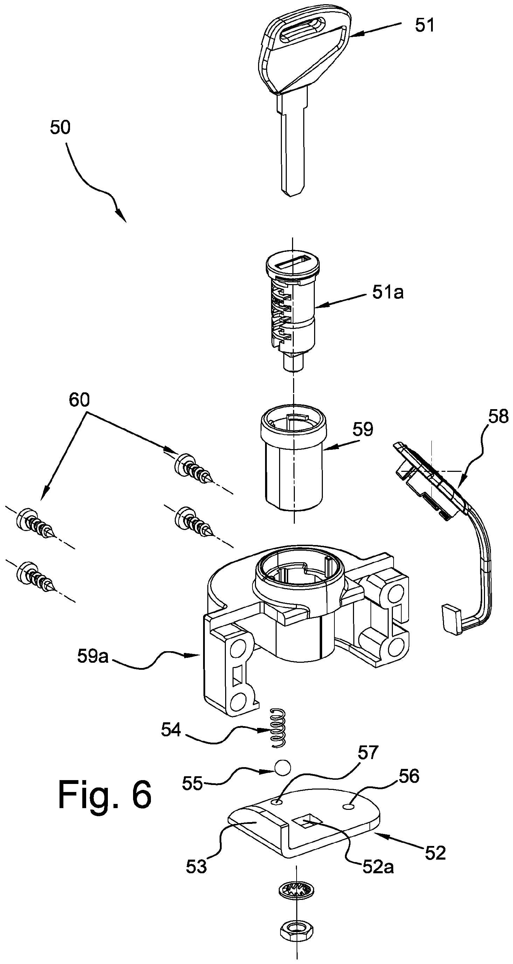

With particular reference to the exploded view of Figure 6, advantageously the fastening system according to the present invention comprises a closure system **50** which in turn comprises a positioning system for positioning the locking element **52** comprising locking holes **56, 57** a spring **54** and a locking ball **55.**

On the locking element **52** are present two locking holes, a first locking hole **56** and a second locking hole **57,** positioned on said locking element **52** so as to be at the ends of a 90° circumference arc centred in the connecting point **52a** of said locking element **52** and said lock cylinder **51a** so as to constitute end stops for the rotation of said locking element **52** respectively in the closure and opening position of the closure device **50.**

In the closed position, the locking ball **55** is thrust by the spring **54,** preferably a helical spring, within the first locking hole **56** thus making the position of the key **51** stable in closure. Rotating the key **51,** the ball **55** slides along the inner face of the locking element **52** until the ball **55,** thrust by the spring **54,** does not fall into the second locking hole **57** thus making the position of the key **51** stable in opening. Advantageously, an anti-dust cap **58** is provided to be embedded on the latch of the lock cylinder **51a** so that, once the key **51** is removed from the cylinder, dirt cannot enter into the lock, thus making it difficult or impossible to insert the key and/or to open/close the system.

All the components of the closure device **50** are preferably assembled inside a closing case **59a** which is fixed to the counter-plate **4** through a plurality of screws **60.**

Said closing case **59a** also performs the function of preserving the closing mechanism from the entry of dirt that could compromise its operation.

From the above description, the features of the fastening system for fastening a bag or a top-box to a support structure integrally connected to a motorcycle are clear, as are clear the related advantages.

In addition, it is understood that the fastening system according to the present invention is susceptible to many modifications and variants, all within the scope of protection identified by the claims.

Moreover, all the details and materials indicated by way of example can be replaced by technically equivalent elements.

## Claims

1. Fastening system (10) for fastening a bag (1) or a top-box to a support structure (6, 7) integrally connected to a motorcycle, comprising a plate (3) configured to be stably fixed to said support structure integrally connected to the motorcycle, a counter-plate (4) stably fixed to a bag or top-box (1) and able to be removably associated with said plate (3), wherein said counter-plate (4) comprises a plurality of fastening teeth (41) and said plate (3) comprises a corresponding number of housing seats (31) which are each configured to receive one of said fastening teeth (41), said housing seats (31) each comprising an insertion segment (31a) configured to allow the insertion of a corresponding tooth (41) following a substantially orthogonal approach movement of the counter-plate (4) to the plate (3), and a sliding segment (31b) for fastening said tooth (41) in the corresponding housing seat (31) following the relative translation of said counter-plate (4) with respect to said plate (3), said counter-plate (4) further comprising at least one closure device (50) able to be actuated by the user and adapted to selectively prevent the relative translation movements of said counter-plate (4) with respect to said plate (3), **characterised in that** said closure device (50) in turn comprises a lock cylinder (51a) inserted in a containment cylinder (59) in turn inserted in a dedicated closing case (59a), said closure device (50) also comprises a dedicated key (51) for the actuation of said lock cylinder (51a) and a locking element (52) connected to said lock cylinder (51a) and rotatable by means of a rotation of said key (51), said locking element (52) comprises a locking tooth (53) that projects from said locking element (52) in a direction orthogonal to the plane in which said locking element (52) lies, said locking element (52) being configured to be inserted into an opening (32) obtained on said plate (3) and configured to house said locking element (52) when said counter-plate (4) and said plate (3) are coupled and said key (51) of said locking device (50) is brought into closure position, so that said locking tooth (53) interferes with said plate (3) preventing the decoupling of the counter-plate (4) from the plate (3).

2. Fastening system (10) according to the previous claim, **characterised in that** said closure device (50) can be actuated by the user between an open position that allows the relative translation movement of the counter-plate (4) with respect to the plate (3) so that said fastening teeth (41) can be withdrawn from said housing seats (31) allowing the separation of said counter-plate (4) from said plate (3), and a closed position in which the relative movement of said counter-plate (4) with respect to said plate (3) is prevented, and said teeth (41) are stably held in said seats (31) and the counter-plate (4) is stably associated with said plate (3).

3. Fastening system (10) according to the previous claim, **characterised in that** said fastening teeth (41) are configured like a hook, with a first segment (41a) that joins to said counter-plate (4) and projects from it in a direction substantially orthogonal to the plane in which the counter-plate (4) lies, and a second segment (41b) that extends substantially parallel to the plane in which said counter-plate (4) lies.

4. Fastening system (10) according to the previous claim, **characterised in that** each of said housing seats (31) has an insertion segment (31a) having, on the plane defined by said plate (3), a substantially quadrangular profile, and a sliding segment (31b) that joins to said insertion segment (31a) and that has, on the plane defined by said plate (3), a substantially elongated profile having a width suitable for allowing the sliding of said tooth (41) in said sliding segment (31b) in order to carry out the fastening of the counter-plate (4) and of the plate (3) following the relative translation of said counter-plate (4) with respect to said plate (3) .

5. Fastening system (10) according to any one of the previous claims, **characterised in that** said fastening teeth (41), and said housing seats (31), are four in number.

6. Fastening system (10) according to any one of the previous claims, **characterised in that** each of said fastening teeth (41) has said second segment (41b) oriented according to the same direction and facing the same way.

7. Fastening system (10) according to any one of the previous claims, **characterised in that** said counter-plate (4) is fixed to said bag (1) by means of a plurality of screws or rivets.

8. Fastening system (10) according to any one of the previous claims, **characterised in that** said closure device (50) further comprises a positioning system for positioning the locking element (52) comprising at least one first locking hole (56) and a second locking hole (57) obtained on said locking element (52) and positioned so as to constitute end stops for the rotation of said locking element (52) in the closed and open position, respectively, of the closure device (50), said positioning system also comprising at least one locking ball (55) configured to selectively interfere with said first and second (56, 57) locking holes under the thrust of a spring (54).

## Patentansprüche

1. Befestigungssystem (10) zur Befestigung einer Tasche (1) oder einer Top-Box in einer integral mit einem Motorrad verbundenen Tragstruktur (6, 7), umfassend eine Platte (3), die so konfiguriert ist, dass sie stabil an der integral mit dem Motorrad verbundenen Tragstruktur befestigt werden kann, eine Gegenplatte (4), die stabil an einer Tasche oder Top-Box (1) befestigt ist und in der Lage ist, abnehmbar mit der Platte (3) verbunden zu werden, wobei die Gegenplatte (4) eine Vielzahl von Befestigungszähnen (41) umfasst und die Platte (3) eine entsprechende Anzahl von Gehäusesitzen (31) umfasst, die jeweils konfiguriert sind, um einen der Befestigungszähne (41) aufzunehmen, wobei die Gehäusesitze (31) jeweils ein Einführungssegment (31a) aufweisen, das so konfiguriert ist, dass es das Einführen eines entsprechenden Zahns (41) nach einer im Wesentlichen orthogonalen Annäherungsbewegung der Gegenplatte (4) an die Platte (3) ermöglicht, und ein Gleitsegment (31b) zur Befestigung des Zahns (41) in dem entsprechenden Gehäusesitz (31) nach der relativen Verschiebung der Gegenplatte (4) in Bezug auf die Platte (3) umfassen, wobei die Gegenplatte (4) ferner mindestens eine Schließvorrichtung (50) umfasst, die vom Benutzer betätigt werden kann und geeignet ist, die relativen Verschiebungsbewegungen der Gegenplatte (4) in Bezug auf die Platte (3) selektiv zu verhindern, **dadurch gekennzeichnet, dass** die Verschlussvorrichtung (50) ihrerseits einen Schließzylinder (51a) umfasst, der in einen Aufnahmezylinder (59) eingesetzt ist, der seinerseits in ein dediziertes Schließgehäuse (59a) eingesetzt ist, wobei die Verschlussvorrichtung (50) auch einen dedizierten Schlüssel (51) für die Betätigung des Schließzylinders (51a) und ein Verriegelungselement (52) umfasst, das mit dem Schließzylinder (51a) verbunden und mittels einer Drehung des Schlüssels (51) drehbar ist, wobei das Verriegelungselement (52) einen Verriegelungszahn (53) aufweist, der von dem Verriegelungselement (52) in einer Richtung orthogonal zu der Ebene, in der das Verriegelungselement (52) liegt, vorsteht, wobei das Verriegelungselement (52) so konfiguriert ist, dass es in eine Öffnung (32) eingeführt wird, die an der Platte (3) erhalten wird und so konfiguriert ist, dass sie das Verriegelungselement (52) aufnimmt, wenn die Gegenplatte (4) und die Platte (3) gekoppelt sind und der Schlüssel (51) der Verriegelungsvorrichtung (50) in die Schließposition gebracht wird, sodass der Verriegelungszahn (53) mit der Platte (3) eingreift und das Entkoppeln der Gegenplatte (4) von der Platte (3) verhindert.

2. Befestigunssystem (10) nach dem vorhergehenden Anspruch, **dadurch gekennzeichnet, dass** die Verschlussvorrichtung (50) durch den Benutzer zwischen einer offenen Position, welche die relative Verschiebungsbewegung der Gegenplatte (4) in Bezug auf die Platte (3) ermöglicht, sodass die Befestigungszähne (41) aus den Gehäusesitzen (31) herausgezogen werden können, was die Trennung der Gegenplatte (4) von der Platte (3) ermöglicht, und einer geschlossenen Position, in der die relative Bewegung der Gegenplatte (4) in Bezug auf die Platte (3) verhindert wird und die Zähne (41) stabil in den Sitzen (31) gehalten werden und die Gegenplatte (4) stabil mit der Platte (3) verbunden ist, betätigt werden kann.

3. Befestigungssystem (10) nach dem vorhergehenden Anspruch, **dadurch gekennzeichnet, dass** die Befestigungszähne (41) hakenförmig ausgebildet sind, mit einem ersten Segment (41a), das an die Gegenplatte (4) anschließt und von dieser in einer Richtung im Wesentlichen orthogonal zu der Ebene, in der die Gegenplatte (4) liegt, absteht, und einem zweiten Segment (41b), das sich im Wesentlichen parallel zu der Ebene, in der die Gegenplatte (4) liegt, erstreckt.

4. Befestigungssystem (10) nach dem vorhergehenden Anspruch, **dadurch gekennzeichnet, dass** jeder der Gehäusesitze (31) ein Einführungssegment (31a) aufweist, das in der durch die Platte (3) definierten Ebene ein im Wesentlichen viereckiges Profil hat, und ein Gleitsegment (31b), das sich an das Einführungssegment (31a) anschließt und das, in der durch die Platte (3) definierten Ebene ein im Wesentlichen längliches Profil mit einer Breite aufweist, die geeignet ist, das Gleiten des Zahns (41) in dem Gleitsegment (31b) zu ermöglichen, um die Befestigung der Gegenplatte (4) und der Platte (3) nach der relativen Verschiebung der Gegenplatte (4) in Bezug auf die Platte (3) auszuführen.

5. Befestigungssystem (10) nach einem der vorhergehenden Ansprüche, **dadurch gekennzeichnet, dass** die Befestigungszähme (41) und die Gehäusesitze (31) vier an der Zahl sind.

6. Befestigungssystem (10) nach einem der vorhergehenden Ansprüche, **dadurch gekennzeichnet, dass** jeder der Befestigungszähne (41) das zweite Segment (41b) aufweist, das in der gleichen Richtung ausgerichtet ist und in die gleiche Richtung weist.

7. Befestigungssystem (10) nach einem der vorhergehenden Ansprüche, **dadurch gekennzeichnet, dass** die Gegenplatte (4) mittels einer Vielzahl von Schrauben und Nieten an der Tasche (1) befestigt ist.

8. Befestigungssystem (10) nach einem der vorhergehenden Ansprüche, **dadurch gekennzeichnet, dass** die Verschlussvorrichtung (50) außerdem ein Positionierungssystem zur Positionierung des Verriegelungselements (52) umfasst, das mindestens ein erstes Verriegelungsloch (56) und ein zweites Verriegelungsloch (57) umfasst, die auf dem Verriegelungselement (52) erhalten werden und so positioniert sind, dass sie Endanschläge für die Drehung des Verriegelungselements (52) in der geschlossenen und offenen Position der Verschlussvorrichtung (50) bilden, wobei das Positionierungssystem auch mindestens eine Verriegelungskugel (55) umfasst, die so konfiguriert ist, dass sie unter dem Druck einer Feder (54) selektiv in das erste und zweite (56, 57) Verriegelungsloch eingreift.

## Revendications

1. Système de fixation (10) pour fixer une sacoche (1) ou un top case à une structure de support (6, 7) relié entièrement à une motocyclette, comprenant une plaque (3) configurée pour être fixée de manière stable à ladite structure de support reliée entièrement à la motocyclette, une contre-plaque (4) fixée de manière stable à une sacoche ou à un top case (1) et capable d'être associée avec ladite plaque (3), où ladite contre-plaque (4) comprend une pluralité de dents de fixation (41) et ladite plaque (3) comprend un nombre correspondant de sièges de logement (31) qui sont chacun configuré pour recevoir une desdites dents de fixation (41), lesdits sièges de logement (31) chacun comprenant un segment d'insertion (31a) configuré pour permettre l'insertion d'une dent correspondante (41) suivant un mouvement d'approche sensiblement orthogonal de la contre-plaque (4) à la plaque (3), et un segment de coulissement (31b) pour fixer ladite dent (41) dans le siège de logement correspondant (31) suivant la translation relative de ladite contre-plaque (4) par rapport à ladite plaque (3), ladite contre-plaque (4) comprenant en outre au moins un dispositif de fermeture (50) capable d'être actionné par l'utilisateur et adapté pour prévenir de manière sélective les mouvements de translation relative de ladite contre-plaque (4) par rapport à ladite plaque (3), **caractérisé en ce que** ledit dispositif de fermeture (50) à son tour comprend un cylindre de verrouillage (51a) inséré dans un cylindre de confinement (59) à son tour inséré dans un boîtier de fermeture dédié (59a), ledit dispositif de fermeture (50) comprend également une clé dédiée (51) pour l'actionnement dudit cylindre de verrouillage (51a) et un élément de verrouillage (52) relié audit cylindre de verrouillage (51a) et rotatif au moyen d'une rotation de ladite clé (51), ledit élément de verrouillage (52) comprend une dent de verrouillage (53) qui fait saillie dudit élément de verrouillage (52) dans une direction orthogonale au plan dans lequel ledit élément de verrouillage (52) se trouve, ledit élément de verrouillage (52) étant configuré pour être inséré dans une ouverture (32) obtenue sur ladite plaque (3) et configurée pour loger ledit élément de verrouillage (52) lorsque ladite contre-plaque (4) et ladite plaque (3) sont couplées et ladite clé (51) dudit dispositif de verrouillage (50) est amenée dans la position de fermeture, de manière à ce que ladite dent de verrouillage (53) interfère avec ladite plaque (3) prévenant le découplage de la contre-plaque (4) de la plaque (3).

2. Système de fixation (10) selon la revendication précédente, **caractérisé en ce que** ledit dispositif de fermeture (50) peut être actionné par l'utilisateur entre une position ouverte qui permet le mouvement de translation relative de la contre-plaque (4) par rapport à la plaque (3) de manière à ce que ladite dent de fixation (41) peut être retirée desdits sièges de logement (31) permettant la séparation de ladite contre-plaque (4) de ladite plaque (3), et une position fermée dans laquelle ledit mouvement relatif de ladite contre-plaque (4) par rapport à ladite plaque (3) est prévenu, et lesdites dents (41) sont tenues de manière stable dans lesdits sièges (31) et la contre-plaque (4) est associée de manière stable avec ladite plaque (3) .

3. Système de fixation (10) selon la revendication précédente, **caractérisé en ce que** lesdites dents de fixation (41) sont configurées comme un crochet, avec un premier segment (41a) qui joint ladite contre-plaque (4) et fait saillie de celle-ci dans une direction sensiblement orthogonale au plan dans lequel la contre-plaque (4) se trouve, et un second segment (41b) qui s'étend sensiblement parallèle au plan dans lequel ladite contre-plaque (4) se trouve.

4. Système de fixation (10) selon la revendication précédente, **caractérisé en ce que** chacun desdits sièges de logement (31) a un segment d'insertion (31a) ayant, sur le plan défini par ladite plaque (3), un profil sensiblement quadrangulaire, et un segment de coulissement (31b) qui joint ledit segment d'insertion (31a) et qui a, sur le plan défini par ladite plaque (3), un profil sensiblement allongé ayant une largeur appropriée pour permettre le coulissement de ladite dent (41) dans ledit segment de coulissement (31b) de manière à effectuer la fixation de la contre-plaque (4) et de la plaque (3) suivant la translation relative de ladite contre-plaque (4) par rapport à ladite plaque (3) .

5. Système de fixation (10) selon l'une quelconque des revendications précédentes, **caractérisé en ce que** lesdites dents de fixation (41), et lesdits sièges de logement (31), sont quatre.

6. Système de fixation (10) selon l'une quelconque des revendications précédentes, **caractérisé en ce que** chacune desdites dents de fixation (41) a ledit second segment (41b) orienté selon la même direction et tourné dans la même direction.

7. Système de fixation (10) selon l'une quelconque des revendications précédentes, **caractérisé en ce que** ladite contre-plaque (4) est fixée à ladite sacoche (1) au moyen d'une pluralité de vis ou de rivets.

8. Système de fixation (10) selon l'une quelconque des revendications précédentes, **caractérisé en ce que** ledit dispositif de fermeture (50) comprend en outre un système de positionnement pour le positionnement de l'élément de verrouillage (52) comprenant au moins un premier trou de verrouillage (56) et un second trou de verrouillage (57) obtenu sur ledit élément de verrouillage (52) et positionné de manière à constituer des butées d'extrémité pour la rotation dudit élément de verrouillage (52) dans la position fermée et ouverte, respectivement, du dispositif de fermeture (50), ledit système de positionnement comprenant également au moins une bille de verrouillage (55) configurée pour interférer de manière sélective avec ledit premier et ledit second (56, 57) trou de verrouillage sous la poussée d'un ressort (54).
